# EUROPEAN PATENT APPLICATION

(11) **EP 3 451 143 A1**
(43) Date of publication of application: **06.03.2019**
(21) Application number: 17202577.7
(22) Date of filing: 20.11.2017
(51) Int. Cl.: G06F 3/12

(54) **THREE-DIMENSIONAL PRINTING METHOD AND THREE-DIMENSIONAL PRINTING APPARATUS USING THE SAME**

(30) Priority: 29.08.2017 US 201715690228
(71) Applicant: XYZprinting, Inc., New Taipei City 22201 (TW); Kinpo Electronics, Inc., New Taipei City 22201 (TW)
(72) Inventor: YUAN, Kuo-Yen, New Taipei City 22201 (TW); LIN, Yi-Ying, New Taipei City 22201 (TW)
(74) Representative: 2K Patentanwälte Blasberg Kewitz & Reichel

(57) **Abstract**

A three-dimensional (3D) printing method for printing a 3D object is provided. The 3D printing method is applicable to a 3D printing apparatus, and includes: sequentially executing a sequence of printing commands to print the 3D object; obtaining an adjustment signal during executing the printing commands, wherein the adjustment signal is used for adjusting a printing parameter; and adjusting the printing parameter in one of the printing commands in response to the obtained adjustment signal. In addition, a 3D printing apparatus using the 3D printing method is also provided.

## Description

### BACKGROUND

### Field of the Invention

The invention is directed to a three-dimensional (3D) printer, and more particularly, to a 3D printing method that adjusts the printing parameter and a 3D printing apparatus using the 3D printing method.

### Description of Related Art

Along with the development of technologies, a three-dimensional (3D) printing technique has become one of the most important techniques under development. The 3D printing technique is also referred to as an additive manufacturing (AM) technique which is a type of rapid prototyping (RP) technique and can establish a 3D object through a layer-by-layer printing manner based on a digital forming drawing file by using bonding materials, such as powdered metals or plastic materials.

A currently available 3D printing device can execute printing commands to control a print head for 3D printing according to the printing parameters within the executed printing commands. During the printing process, users have no other chances to control their printing process. However, different users have different requirements or expectations regarding the printed product. As such, for advanced and experienced users, it would be helpful to provide a mechanism that provides a control right to the users during the printing process.

### SUMMARY

The invention provides a 3D printing method and a 3D printing apparatus using the 3D printing method, which provide an opportunity for real-time controlling the printing parameters during a printing procedure.

An exemplary embodiment of the invention provides a 3D printing method for printing a 3D object. The 3D printing method is applicable to a 3D printing apparatus, and includes: sequentially executing a sequence of printing commands to print the 3D object; obtaining an adjustment signal during executing the printing commands, where the adjustment signal is used for adjusting a printing parameter; and adjusting the printing parameter in one of the printing commands in response to the obtained adjustment signal.

Another exemplary embodiment of the invention provides a 3D printing apparatus includes a print head, an input device, a storage device and a controller. The storage device is configured to store a sequence of printing commands. The controller is coupled to the print head, the input device and the storage device, and configured to sequentially execute the printing commands to print a 3D object by the print head. The controller obtains an adjustment signal through the input device during executing the printing commands, and adjusts a printing parameter of one of the printing commands in response to the obtained adjustment signal, where the adjustment signal is used for adjusting the printing parameter.

Based on the above, the 3D printing method and the 3D printing apparatus provided in the embodiments of the invention is capable of adjusting the printing parameters of one of a sequence of printing commands during sequentially executing the printing commands. Accordingly, a user can real-time adjust the printing parameters as desired when his/her 3D object is being printing, thus convenience and flexibility of 3D printing can be improved.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 illustrates a schematic block diagram of a three-dimensional printing apparatus according to an embodiment of the invention.
FIG. 2 illustrates a flowchart of a three-dimensional printing method according to an embodiment of the invention.
FIG. 3 illustrates a flowchart of obtaining the adjustment signal according to an embodiment of the invention.
FIG. 4A illustrates a schematic diagram of a prompt message displayed on a display according to an embodiment of the invention.
FIG. 4B illustrates a schematic diagram of a prompt message displayed on a display according to another embodiment of the invention.

### DESCRIPTION OF EMBODIMENTS

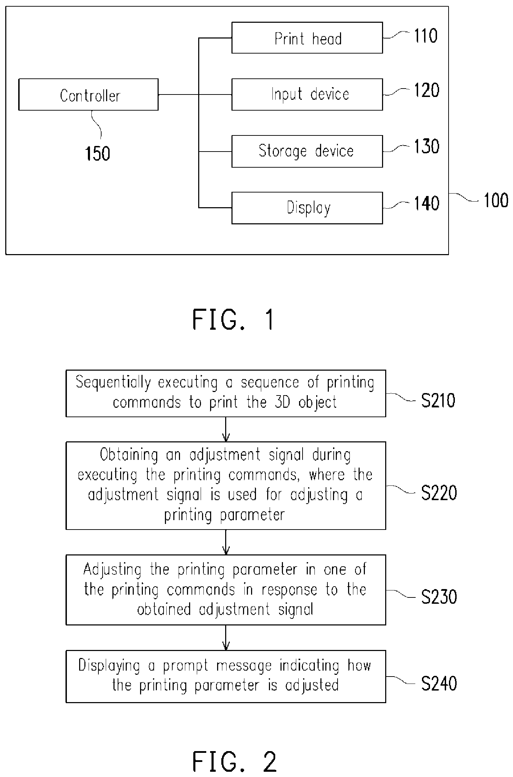

FIG. 1 illustrates a schematic block diagram illustrating a three-dimensional (3D) printing apparatus according to an embodiment of the invention. Referring to FIG. 1, a 3D printing apparatus 100 includes a print head 110, an input device 120, a storage device 130, a display 140, and a controller 150. The 3D printing apparatus 100 is, for example, a 3D printer.

The print head 110 may perform printing by using, for example, one of a selective laser sintering (SLS) technique, a selective laser melting (SLM) technique, a plaster-based 3D printing (PP) technique and a fused deposition modeling (FDM) technique, which is not limited herein. In one embodiment of the invention, the print head 110 is configured to melt a filament and extrude printing materials for printing an 3D object.

The input device 120 may receive at least one type of input signal. For example, the input device 120 may be one or a combination of: at least one physical button disposed on the 3D printing apparatus, a wireless transceiver, and an audio input such as a microphone, but which are not limited herein. In one embodiment of the invention, the input device 120 includes at least the audio input for receive voice signals so that the 3D printing apparatus 100 provides a function of voice control.

The storage device 130 may be any type of fixed or portable random access memory (RAM), read-only memory (ROM), flash memory, or similar components, or a combination of the above components, which is not limited herein. In one embodiment of the invention, the storage device 130 is configured to store a sequence of printing commands to be executed. In another embodiment of the invention that the 3D printing apparatus 100 provides the function of voice control, the storage device 130 further stores a database supporting the function of voice control. Details of the printing commands, the function of voice control and the database supporting the same will be illustrated in the following descriptions.

The display 140 provides information of the printing status. The display 140 may be, for example, a liquid-crystal display (LCD) disposed on the 3D printing apparatus 100. In some cases, the LCD is combined with the input device 120, such that the input device 120 and the display 140 can be implemented together as a touch screen.

The controller 150 is coupled to the print head 110, the input device 120, the storage device 130 and the display 140, and is in charge of the overall operations of the 3D printing apparatus 100. The controller 150 may be a programmable device for general purpose or special purpose, for example, a central processing unit (CPU), a microprocessor or an embedded controller.

In one embodiment of the invention, the controller 150 may transfer an original image file (e.g., .STL, .SCAD, .OBJ, .3DS, .AMF, etc.) depicting a 3D object to a G-code file including multiple rows of G-code, where each row of the G-code stands for a printing command of the print head 110. After that, the controller 150 may sequentially execute the printing commands (the rows of the G-code) to control the print head 110 for printing the 3D object. Exemplary example of some rows of the G-code are listed in Table. 1 below.

**Table. 1**

| Row No. | G-code | | | | |
|---|---|---|---|---|---|
| 61 | G1 | X82.000 | Y72.000 | F300.000 | E8 |
| 62 | G1 | X67.000 | Y77.000 | E10.68 | |
| 63 | G1 | X67.000 | Y72.000 | E11.15 | |
| 64 | G1 | X82.000 | Y72.000 | F300.000 | E8 |
| 65 | G1 | X67.000 | Y77.000 | E10.68 | |
| 66 | G1 | X67.000 | Y72.000 | E11.15 | |

As shown in Table. 1, the 3D printing apparatus 100 may sequentially execute multiple rows of the G-code named G1 in this embodiment. Each row of the G-code mainly includes a destination position of the print head 110. The G-code of row No. 61 is taken as an example for description in the following.

In the embodiment, the field "F300.000" have the controller 150 control the print head 110 to move in a speed rate of 300 mm/min, namely, "F300.000" represents a printing parameter of "moving speed of the print head 110" with value of 300 mm/min. In some cases, a row of the G-code does not have the printing parameter of "moving speed" (e.g., "FXXX") of the print head 110, which indicates that the controller 150 does not change the moving speed of the print head 110 when executing the row of the G-code.

In the embodiment, the field "X82.000 Y72.000" represents a destination coordinate (i.e., (82, 72)) where the print head 110 is finally located after the execution of the G-code of row No. 61 is completed, namely, "X82.000 Y72.000" represents a printing parameter of "location of the print head 110" with value of (82, 72). In some cases, a Z-axial coordinate is existed in a row of the G-code, which indicates that the row of the G-code makes the height of the print head 110 be adjusted.

In the embodiment, the field "E8" have the controller 150 control the filament or material extruded from the print head 110 is 8 mm, namely, "E8" represents a printing parameter of "feeding amount of the print head 110" with value of 8 mm.

For instance, when the controller 150 executes the G-code of row No. 61, the print head 110 moves in the speed of 300 mm/min toward the destination coordinate (82, 72) and the material extruded from the print head 110 is 8 mm during the process of moving. In the same way, when the controller 150 executes the G-code of row No. 62, the print head 110 continues to move in the speed of 300 mm/min toward a destination coordinate (67, 77), and the material extruded from the print head 110 is 10.68 mm during the process of moving. In other words, 2.68 mm of the material is fed when the G-code of row No. 62 is executed by the controller 150. In the embodiment, the printing parameter can be a "moving speed of the print head 110", a "location of the print head 110", or a "feeding amount from the print head 110", but which is not limited in the invention. In other embodiments, the printing parameter can be any other parameter that affects the printing procedure.

It is noted the printing parameter of "feeding amount of the print head 110" is not monotonically increasing. For example, the material extruded from the print head 110 is 11.15 mm when the G-code of row No. 63 is executed, and the material extruded from the print head 110 is 8 mm when the G-code of row No. 64 is executed. Namely, the material is retracted by length of 3.15 mm when the G-code of row No. 64 is executed.

FIG. 2 illustrates a flowchart of a 3D printing method according to an embodiment of the invention. The 3D printing method may be performed by the 3D printing apparatus 100 of the embodiment of FIG. 1. Therefore, the 3D printing method may be illustrated by referring to the aforementioned 3D printing apparatus 100 in the present embodiment.

Referring to FIG. 1 and FIG. 2, in order to print a 3D object, the controller 150 may load a sequence of printing commands and sequentially execute the printing commands to print the 3D object (S210). In one embodiment, the controller 150 may load a G-code file including multiple rows of the G-code (i.e., the printing commands), each printing command is corresponding to one single row of the G-code as described above. After that, the controller 150 starts the printing procedure and executes the printing commands sequentially. The G-code file may be, for example, originally stored in the storage device 130 or received from the input device 120, which is not limited in the invention.

During executing the printing commands, the controller 150 obtains an adjustment signal through the input device 120 (S220). To be specific, the adjustment signal comes from an external signal and is used for adjusting a printing parameter of the printing procedure. As such, the adjustment signal includes information of a printing parameter specifically indicating what is being adjusted, and an adjustment behavior of the printing parameter specifically indicating how the printing parameter is adjusted. For example, an adjustment signal may be used for increasing the moving speed of the print head 110. In this case, the adjustment signal should be corresponding to the printing parameter of "moving speed of the print head 110", meanwhile corresponding to the adjustment behavior of "increase". For another example, an adjustment signal may be used for retracting more materials from the print head 110. In this case, the adjustment signal should be corresponding to the printing parameter of "feeding amount from print head 110", meanwhile corresponding to the adjustment behavior of "decrease".

In one embodiment, user may generate the adjustment signal by at least one physical or virtual button disposed on the 3D printing apparatus 100, therefore the adjustment signal may be received through the at least one physical or virtual button. In one embodiment, user may generate a wireless signal by using a remote controller, and the wireless signal may be received through a wireless transceiver of the 3D printing apparatus 100 and transferred to the adjustment signal by the controller 150.

Advantageously, user may generate the adjustment signal through the voice in one embodiment of the invention, a voice signal generated by the user may be received through an audio input (e.g., a microphone) of the 3D printing apparatus 100 and be transferred to the adjustment signal by the controller 150 using technologies such as semantic analysis. In one embodiment, for supporting the function of voice control, the storage device 130 stores a database that records, for example, multiple nouns and the printing parameter corresponding to each noun. As per each of the nouns, the database records multiple verbs and the adjustment behavior corresponding to each verb.

For example, for the noun "speed" corresponding to the printing parameter "moving speed of the print head 110", the verbs "rise" and "increase" may both correspond to the adjustment behavior "increase", and the verbs "drop" and "decrease" may both correspond to the adjustment behavior "decrease". In such case, when "speed" and "rise" are extracted from a voice signal, which means that the value of the printing parameter "moving speed of the print head 110" will be increased accordingly.

For another example, for the noun "retract length" corresponding to the printing parameter "feeding amount from the print head 110", the verb "rise" and "increase" may both correspond to the adjustment behavior "decrease", and the verbs "drop" and "decrease" may both correspond to the adjustment behavior "increase". In such case, when "retract length" and "increase" are extracted from a voice signal, which means that the value of the printing parameter "feeding amount from the print head 110" will be decreased accordingly.

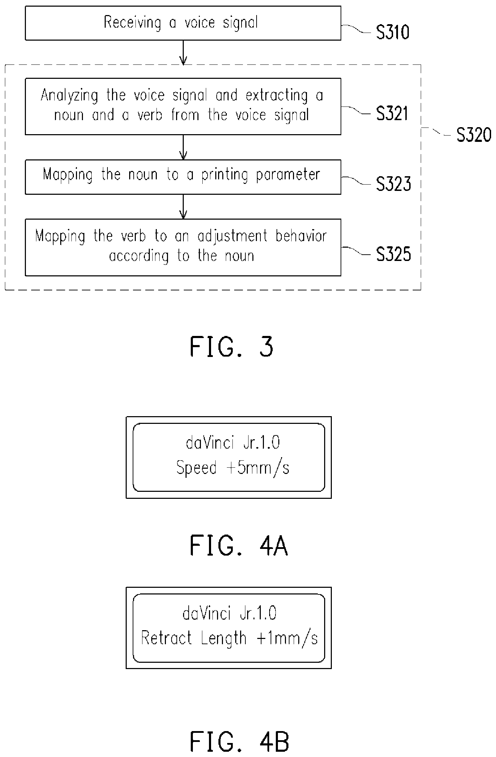

FIG. 3 illustrates a flowchart of obtaining the adjustment signal according to an embodiment of the invention. Referring to FIG. 3, the controller 150 receives a voice signal through the input device 120 (S310), then transfers the voice signal to an adjustment signal (S320).

To be specific, after receiving the voice signal, the controller 150 may analyze the voice signal and to extract a noun and a verb from the voice signal (S321). For example, the received voice signal says "rise the speed, please". The controller 150 may perform a semantic analysis on the voice signal to extract the noun "speed" and the verb "rise" from the voice signal. For another example, the received voice signal says "increase the retract length". The controller 150 may perform a semantic analysis on the voice signal to extract the noun "retract length" and the verb "increase" from the voice signal.

Subsequently, the controller 150 may map the noun to a printing parameter (S323), and map the verb to an adjustment behavior according to the noun (S325). For example, regarding the extracted "speed" and "rise", the controller 150 may consult a database stored in the storage device 130, map the "speed" to the printing parameter "moving speed of the print head 110", and map the "rise" to the adjustment behavior "increase". As a result, an adjustment signal used for increasing the moving speed of the printing head 110 is thus transferred from the voice signal. For another example, regarding the extracted "retract length" and "increase", the controller 150 may consult a database stored in the storage device 130, map the "retract length" to the printing parameter "feeding amount from the print head 110", and map the "increase" to the adjustment behavior "decrease". As a result, an adjustment signal used for increase the retract length is thus transferred from the voice signal.

It is noted that the embodiment of FIG. 3 is mere an exemplary embodiment, and how the voice signal is transferred to the adjustment signal is not limited in the invention. In another embodiment, the database may further record comparative adjectives such as "faster" or "slower", and each comparative adjective may correspond to an adjustment behavior. In still another embodiment, the database may further record nouns composed of a number and a unit, such as "5 mm/sec" or "10 mm/sec", and each noun may correspond to an adjustment behavior as well. One skilled in the art can obtain enough knowledge of how to transfer a voice signal to an adjustment signal for adjusting the printing parameter by the controller 150, which is not repeatedly described in the description.

Referring back to FIG. 2, in response to the obtained adjustment signal, the controller 150 may adjust a specific printing parameter in one of the printing commands (S230), where information of the specific printing parameter is in the obtained adjustment signal as mentioned before. For providing the printing status, the controller 150 may display a prompt message on the display 140 when the printing parameter is adjusted (S240), where the prompt message indicates how the printing parameter is adjusted.

In detail, the adjustment signal may be obtained when the controller 150 is executing the n^{th} command of the printing commands, where n is a natural number. In response to the obtained adjustment signal, the controller 150 may determine an m^{th} command of the printing commands is corresponding to adjustment signal, where m is a natural number greater than n. Afterwards, the controller 150 may adjust the specific printing parameter in m^{th} command of the printing command, and display a prompt message since any printing parameter is adjusted. In one embodiment, the controller 150 may find the m^{th} command that makes the controller 150 perform similar adjustment as the adjustment signal does, then adjust the specific printing parameter in the m^{th} command according to the adjustment signal.

In one embodiment, the G-code listed in Table. 1 is taken as an example:

**Table. 1**

| Row No. | G-code | | | | |
|---|---|---|---|---|---|
| 61 | G1 | X82.000 | Y72.000 | F300.000 | E8 |
| 62 | G1 | X67.000 | Y77.000 | E10.68 | |
| 63 | G1 | X67.000 | Y72.000 | E11.15 | |
| 64 | G1 | X82.000 | Y72.000 | F300.000 | E8 |
| 65 | G1 | X67.000 | Y77.000 | E10.68 | |
| 66 | G1 | X67.000 | Y72.000 | E11.15 | |

In this embodiment, an adjustment signal for increasing the moving speed of the print head 110 is obtained when the controller 150 is executing the G-code of row No. 61 (i.e., the 61^{th} command). In response thereto, the controller 150 may find the G-code of row No. 64 (i.e., the 64^{th} command) having the printing parameter of "moving speed of the print head 110" (i.e., F300.000), then increase the value of the printing parameter within a preset range. For example, the moving speed of the print head 110 is preset to be adjust within ±20 mm/sec. Therefore, the printing parameter of "F300.000" is not going to be adjusted to over "F1500.000". On the other hand, the printing parameter of "moving speed of the print head 110" is set to increase/decrease ±5 mm/sec in response to one adjustment signal with adjustment behavior of "increase/decrease" in the embodiment. Accordingly, the G-code will be adjusted as listed in Table. 2 below:

**Table. 2**

| Row No. | G-code | | | | |
|---|---|---|---|---|---|
| 61 | G1 | X82.000 | Y72.000 | F300.000 | E8 |
| 62 | G1 | X67.000 | Y77.000 | E10.68 | |
| 63 | G1 | X67.000 | Y72.000 | E11.15 | |
| 64 | G1 | X82.000 | Y72.000 | F600.000 | E8 |
| 65 | G1 | X67.000 | Y77.000 | E10.68 | |
| 66 | G1 | X67.000 | Y72.000 | E11.15 | |

As shown in Table. 2, the "F300.000" is adjusted to "F600.000" in response to the adjustment signal. As a result, the moving speed of the print head 110 would be accelerated to 10 mm/sec when the controller 150 executes the G-code of row No. 64, and the prompt message would be displayed on the display 140 as shown in FIG. 4A.

In one embodiment, the G-code listed in Table. 3 is taken as an example:

**Table. 3**

| Row No. | G-code | | | | |
|---|---|---|---|---|---|
| 61 | G1 | X82.000 | Y72.000 | F300.000 | E8 |
| 62 | G1 | X67.000 | Y77.000 | E10.68 | |
| 63 | G1 | X67.000 | Y72.000 | E11.15 | |
| 64 | G1 | X82.000 | Y72.000 | F300.000 | E8.15 |
| 65 | G1 | X67.000 | Y77.000 | E8.68 | |
| 66 | G1 | X67.000 | Y72.000 | E9.15 | |

In this embodiment, an adjustment signal for increasing the retract length of the print head 110 is obtained when the controller 150 is executing the G-code of row No. 61 (i.e., the 61^{th} command). In response thereto, the controller 150 may find the G-code of row No. 64 (i.e., the 64^{th} command) that makes the controller 150 perform similar adjustment (i.e., retracting from the print head 110) as the adjustment signal does. In such case, the G-code of row No. 64 (i.e., the 64^{th} command) is referred as being corresponding to the adjustment signal that increases the retract length from the print head 110.

According to the adjustment signal for increasing the retract length of the print head 110, the value of the printing parameter "feeding amount of the print head 110" (i.e., E8.15) in the 64^{th} command is then decreased within a preset range. For example, the retract length is preset to be adjust within ±10 mm. Therefore, the printing parameter of "E8.15" must be adjusted in the range of "E-1.85" to "E18.15". On the other hand, the printing parameter of "feeding amount from the print head 110" is set to increase/decrease ±1 mm in response to one adjustment signal with adjustment behavior of "increase/decrease" in the embodiment. Accordingly, the G-code will be adjusted as listed in Table. 4 below:

**Table. 4**

| Row No. | G-code | | | | |
|---|---|---|---|---|---|
| 61 | G1 | X82.000 | Y72.000 | F300.000 | E8 |
| 62 | G1 | X67.000 | Y77.000 | E10.68 | |
| 63 | G1 | X67.000 | Y72.000 | E11.15 | |
| 64 | G1 | X82.000 | Y72.000 | F300.000 | E7.15 |
| 65 | G1 | X67.000 | Y77.000 | E7.68 | |
| 66 | G1 | X67.000 | Y72.000 | E8.15 | |

As shown in Table. 4, the "E8.15" is adjusted to "E7.15" in the G-code of row No. 64 in response to the adjustment signal. That is, the retract length is increase from 3 mm to 4 mm when the controller 150 executes the G-code of row No. 64 in response to the adjustment signal, and the prompt message would be displayed on the display 140 as shown in FIG. 4B. It is noted that the print parameters "E8.68" and "9.15" in the G-code of rows No. 65 and 66 are adjusted correspondingly. The reason is that only the retract length is supposed to be adjusted according to the adjustment signal, and the other variables for printing should not be affected. For example, 0.53 mm (i.e., 8.68 - 8.15 = 0.53) of the material is supposed to be fed when the G-code of row No. 65 is executed by the controller 150 originally, then the same length of 0.53 mm (i.e., 7.68 - 7.15 = 0.53) of the material should be also fed when the G-code of row No. 65 is executed by the controller 150 after the adjustment signal is obtained.

It is noted that in some embodiments, the adjustment of the printing parameter is only applied to the first command corresponding to the adjustment signal and being subsequent to the n^{th} command of the printing commands. However, in some embodiments, the adjustment of the printing parameter can be applied to all command corresponding to the adjustment signal and being subsequent to the n^{th} command of the printing commands.

In summary, by adopting the 3D printing method and 3D printing apparatus provided in the embodiments of the invention, the printing parameters, such as moving speed or retract length of the print head, can be adjusted during the printing procedure. Accordingly, convenience and flexibility of 3D printing can be improved. For instance, fine details are within a part of an object to be printed, while another part of the object is smooth and with few details. Therefore, the moving speed of the print head can be decrease when printing the part with fine details, the moving speed of the print head can be increase when printing the part with few details, and thus the printing time can be saved. Additionally, the function of voice control is provided in one embodiment of the invention. By using the function of voice control, the users may conveniently and real-time adjust the printing parameters during the printing procedure as desired.

## Claims

1. A three-dimensional (3D) printing method for printing a 3D object, applicable to a 3D printing apparatus (100), comprising:
sequentially executing a sequence of printing commands to print the 3D object;
obtaining an adjustment signal during executing the printing commands, wherein the adjustment signal is used for adjusting a printing parameter; and
adjusting the printing parameter in one of the printing commands in response to the obtained adjustment signal.

2. The 3D printing method as claimed in claim 1, wherein obtaining the adjustment signal during executing the printing commands comprises:
obtaining the adjustment signal when executing a n^{th} command of the printing commands, wherein n is a natural number.

3. The 3D printing method as claimed in claim 2, wherein adjusting the printing parameter of the printing command in response to the adjustment signal comprises:
determining an m^{th} command of the printing commands is corresponding to the adjustment signal, wherein m is a natural number greater than n; and
adjusting the printing parameter in the determined m^{th} command of the printing commands according to the adjustment signal.

4. The 3D printing method as claimed in claim 3, further comprising:
displaying a prompt message on a display (140) when the printing parameter is adjusted.

5. The 3D printing method as claimed in claim 1, wherein obtaining the adjustment signal comprises:
receiving a voice signal; and
transferring the voice signal to the adjustment signal.

6. The 3D printing method as claimed in claim 5, wherein transferring the voice signal to the adjustment signal comprises:
analyzing the voice signal and extracting a noun and a verb from the voice signal;
mapping the noun to the printing parameter;
mapping the verb to an adjustment behavior according to the noun.

7. The 3D printing method as claimed in claim 6, wherein adjusting the printing parameter in the printing command in response to the adjustment signal comprises:
adjusting the mapped printing parameter in the printing command according to the mapped adjustment behavior.

8. A three-dimensional (3D) printing apparatus (100), comprising:
a print head (110);
an input device (120);
a storage device (130), configured to store a sequence of printing commands; and
a controller (150), coupled to the print head (110), the input device (120) and the storage device (130), and configured to sequentially execute the printing commands to print a 3D object by the print head (110),
wherein the controller (150) obtains an adjustment signal through the input device (120) during executing the printing commands, and adjusts a printing parameter of one of the printing commands in response to the obtained adjustment signal, wherein the adjustment signal is used for adjusting the printing parameter.

9. The 3D printing apparatus (100) as claimed in claim 8, wherein the adjustment signal is received when the controller (150) is executing a n^{th} command of the printing commands, wherein n is a natural number.

10. The 3D printing apparatus (100) as claimed in claim 9, wherein the controller (150) determines an m^{th} command of the printing commands is corresponding to the adjustment signal, and adjusts the printing parameter in the determined m^{th} command of the printing commands according to the adjustment signal, wherein m is a natural number greater than n.

11. The 3D printing apparatus (100) as claimed in claim 10, further comprising:
a display (140) coupled to the controller (150), configured to display a prompt message when the printing parameter is adjusted.

12. The 3D printing apparatus (100) as claimed in claim 8, wherein the input device (120) receives a voice signal, and the controller (150) transfers the voice signal to the adjustment signal.

13. The 3D printing apparatus (100) as claimed in claim 12, wherein the storage device (120) stores a database, and the database comprises a plurality of nouns, each noun corresponds to a printing parameter and a plurality of verbs, and each verb corresponds to an adjustment behavior,
wherein the controller (150) analysis the voice signal and extracts a noun and a verb from the voice signal, wherein the controller (150) further consults the database to map the extracted noun to the printing parameter, and to map the extracted verb to the adjustment behavior according to the noun.

14. The 3D printing apparatus (100) as claimed in claim 13, wherein the controller (150) adjusts the mapped printing parameter of the printing command according to the mapped adjustment behavior.

15. The 3D printing apparatus (100) as claimed in claim 8, wherein the printing parameter comprises one or a combination of a moving speed of a print head (110), a location of the print head (110), and a feeding amount.
